# EUROPÄISCHE PATENTSCHRIFT

(11) **EP 2 010 417 B1**
(45) Veröffentlichungstag und Bekanntmachung des Hinweises auf die Patenterteilung: **06.01.2010**
(21) Anmeldenummer: 07728032.9
(22) Anmeldetag: 12.04.2007
(51) Int. Cl.: B60R 25/02, B60R 25/06

(54) **VERRIEGELUNGSVORRICHTUNG**
LOCKING DEVICE
DISPOSITIF DE VERROUILLAGE

(30) Priorität: 13.04.2006 DE 102006017875
(43) Veröffentlichungstag der Anmeldung: 07.01.2009
(73) Patentinhaber: Huf Hülsbeck & Fürst GmbH & Co. KG, 42551 Velbert (DE)
(72) Erfinder: PIEPER, Friedrich, 84513 Töging (DE)
(74) Vertreter: Bals, Rüdiger
(86) Internationale Anmeldenummer: PCT/EP2007/053565
(87) Internationale Veröffentlichungsnummer: WO 2007/118840

(56) Entgegenhaltungen:
- EP-A- 1 174 314
- GB-A- 2 114 646
- JP-A- 59 014 562

## Beschreibung

Die vorliegende Erfindung ist auf eine Verriegelungsvorrichtung gemäß dem Oberbegriff des Anspruches 1 zum Verriegeln und/oder Entriegeln eines funktionswesentlichen Bauteils bei einem Fahrzeug, wie zum Beispiel einer Lenksäule oder eines Gangschalthebels od. dgl., gerichtet. Dabei kommt ein Sperrglied zum Einsatz, welches in einer Verriegelungsposition aus dem Gehäuse der Verriegelungsvorrichtung herausragt und in einer Wirkverbindung, insbesondere durch einen Formschluss, mit dem funktionswesentlichen Bauteil steht und es dadurch blockiert. Somit ist eine anwendungsvorgesehene Benutzung des funktionswesentlichen Bauteils in der Verriegelungsposition nicht möglich. Dagegen wird eine anwendungsvorgesehene Benutzung in der Entriegelungsposition des Sperrgliedes möglich, wobei das Sperrglied dann nicht in einer Wirkverbindung mit dem funktionswesentlichen Bauteil steht.

Aus dem Stand der Technik ist die Druckschrift DE 10 2004 031 238 A1 bekannt, die eine gattungsgemäße Vorrichtung offenbart, welche in einer sogenannten 12 Uhr-Stellung oberhalb der Lenksäule in einem Fahrzeug angeordnet wird, um durch diese besondere Anordnung einen Diebstahl und/oder Manipulationen möglichst zu erschweren. Diese Vorrichtung weist ebenfalls ein Sperrglied zur Verriegelung des funktionswesentlichen Bauteils in einem Fahrzeug auf. Um eine zusätzliche Sicherung des Sperrgliedes gegen unbeabsichtigtes Verriegeln zu erhalten, ist zusätzlich ein Sicherungselement vorgesehen, wodurch eine formschlüssige Sicherung des Sperrgliedes in der Entriegelungsposition erreichbar ist. Dieses Sicherungselement wird durch einen Antrieb betätigt. Dabei kommt eine aufwendige Mechanik zum Einsatz die aus vielen Teilen besteht, die zueinander beweglich angeordnet sind. Außerdem findet eine Sicherung des Sperrgliedes nicht in der Nähe der Gehäuseöffnung für das Sperrglied statt, so dass bei einem Bruch des Sperrgliedes Bruchstücke das funktionswesentliche Bauteil während der Fahrt des Fahrzeuges blockieren können.

Aus der Offenlegungsschrift DE 100 22 831 A1 geht eine weitere Verriegelungsvorrichtung hervor, bei der ebenfalls das Sperrglied über einen zusätzlichen Sicherungshebel formschlüssig in der Entriegelungsposition gehalten werden kann. Dieser Sicherungshebel wird ebenfalls durch einen Antrieb in seine Sicherungsposition verfahren. Auch diese Verriegelungsvorrichtung weist einen komplexen Aufbau mit vielen Bauteilen auf.

Um die zuvor genannten Verriegelungsvorrichtungen auch gegen Fehlbetätigung des elektrischen Antriebes zu sichern, ist beispielsweise aus der Patentschrift DE 199 64 173 C2 bekannt, ein verschiebbares Sperrelement in seiner Entriegelungsposition durch einen zusätzlichen mechanischen Sicherungshebel formschlüssig zu arretieren. Hierzu weist das Sperrelement an seinem axialen Umfang eine Nut auf, in die der Sicherungshebel eingreift. Durch die zuvor erwähnte Nut findet jedoch eine Schwächung des Sperrelementes statt, die auf Dauer zu einem Ermüdungsbruch des Sperrelementes führen kann. Folglich kann nicht ausgeschlossen werden, dass das Sperrelement bei einem Bruch trotzdem zu einer Verrieglung der Lenkspindel führt.

Besonders die bei einem Unfall wirkenden Kräfte können einen vorzeitigen Bruch des Sperrelementes begünstigen.

Die gattungsbildende Druckschrift EP 1 174 314 A2 offenbart ebenfalls ein Sperrglied, das durch ein Sicherungselement in der Entriegelungsposition arretiert wird. Wird die Arretierung aufgehoben, so fährt das Sperrglied durch die Kraft einer Feder und damit ruckartig in die Verriegelungsposition. Das Sicherungselement arretiert das Sperrglied entfernt von der Gehäuseöffnung, so dass bei einem Bruch des Sperrgliedes die Lenksäule unbeabsichtigt blockiert werden kann.

Die Druckschrift GB 2 114 646 A offenbart ein Sperrglied, das über einen Sicherungshebel in der Entriegelungsposition gesichert wird. Hierbei wird der Sicherungshebel über einen komplizierten Mechanismus bewegt. Auch die JP 59014562 offenbart ein gattungsgemäßes Lenkschloss, bei der jedoch nicht das Sperrglied selber, sondern ein Steuerelement durch ein Sicherungselement gesichert wird.

Ausgehend von dem zuvor erwähnten Stand der Technik ist es Aufgabe der vorliegenden Erfindung, eine rein mechanische oder elektromechanische Verriegelungsvorrichtung zu schaffen, die über einen einfachen und sicheren Aufbau verfügt, und bei welcher das Sicherungselement in einer Arretierungsstellung einen Formschluss mit dem Sperrglied eingeht. Durch die besondere Arretierung des Sperrgliedes mittels des Sicherungselements soll weiterhin erreicht werden, dass keine Bruchstücke aus der Verriegelungsvorrichtung zu einer Blockade des funktionswesentlichen Bauteils während der Fahrt führen können.

Die Aufgabe wird bei einer gattungsgemäßen Verriegelungsvorrichtung durch die kennzeichnenden Merkmale des Anspruches 1 gelöst, denen folgende besondere Bedeutung zukommt.

Die erfindungsgemäße Verriegelungsvorrichtung wird in der Regel in einer sogenannten 12 Uhr-Stellung im Fahrzeug angeordnet - wobei sie jedoch nicht auf diese Einbaustellung beschränkt ist -, um einen möglichen Diebstahl oder Aufbruchsversuch zu erschweren oder sogar zu vermeiden. In dieser 12 Uhr-Stellung ist die Verriegelungsvorrichtung in einer unzugängliche Stellung im Fahrzeug angeordnet. Allerdings muss das Sperrglied bei einer solchen Anordnung der Verriegelungsvorrichtung gegen unbeabsichtigtes Herunterfallen gesichert werden.

Ansonsten kann es zu einer ungewollten Verriegelung des funktionswesentlichen Bauteils kommen. Erfindungsgemäß ist es vorgesehen, dass bei einer rein mechanischen oder elektromechanischen Verriegelungsvorrichtung das vorhandene Steuerelement über zumindest ein zusätzliches Steuermittel zur Betätigung des Sicherungselementes verfügt, wodurch ebenfalls eine Betätigung des Sicherungselementes durch das Steuerelement möglich ist. Folglich wird bei der vorliegenden Erfindung das eingesetzte Steuerelement nicht nur für die Betätigung des Sperrgliedes sondern gleichzeitig für die Betätigung des Sicherungselementes genutzt. Damit ist ein besonders einfacher und kostengünstiger Aufbau der erfindungsgemäßen Verriegelungsvorrichtung mit wenigen Bauteilen möglich. Ebenfalls kann bei der vorliegenden Verriegelungsvorrichtung auf einen zusätzlichen Antrieb für die Betätigung des Sicherungselementes verzichtet werden. Außerdem kann somit sichergestellt werden, dass keine mechanischen Bruchstücke aus der Verriegelungsvorrichtung zu einer ungewünschten Verriegelung des funktionswesentlichen Bauteils führen.

Weitere Ausführungsformen der erfindungsgemäßen Verriegelungsvorrichtung sind in den Unteransprüchen 2 bis 15 beschrieben.

Bei der erfindungsgemäßen Verriegelungsvorrichtung können das Steuerelement und/oder das Sperrglied längsverschiebbar im Gehäuse der Vorrichtung angeordnet sein. Durch die einfache Linearbewegung des Steuerelementes bzw. des Sperrgliedes kann ein platzsparender Aufbau der Verriegelungsvorrichtung realisiert werden. Außerdem ist es möglich, das Steuerelement parallel zum Sperrglied verschiebbar anzuordnen. Dabei kann die eigentliche Längsverschiebung des Steuerelementes über ein drehbares Antriebselement erzeugt werden. Dieses Antriebselement kann selbst aus einem Motor oder einer angetriebenen Scheibe mit einer ebenen Führungsbahn bestehen. Durch diese spiralförmige Führungsbahn ist es möglich, die Längsverschiebung des Steuerelementes nicht proportional zur Drehung des Antriebselementes auszugestalten. Hierdurch ist es möglich, in den einzelnen Bewegungsabschnitten unterschiedliche Verfahrensgeschwindigkeiten für das Steuerelement und damit das Sperrglied zu bewirken.

Zweckmäßigerweise weist das Steuerelement zum Sperrglied einen Formschluss auf, wodurch die Betätigung des Sperrgliedes bewirkt wird. Dieser Formschluss kann aus einem Nocken, der mit einer Ausnehmung zusammenwirkt, gebildet sein. Dabei ist beispielsweise der Nocken an dem Steuerelement angeordnet und ragt in die Ausnehmung, die im Sperrglied angeordnet ist, hinein. Damit das Steuerelement nicht starr zum Sperrglied angeordnet ist, ist es zweckmäßig, die Ausnehmung größer als die Ausmaße des Nockens auszugestalten, um somit den vorhandenen Freiraum für ein Spiel zwischen dem Steuerelement und dem Sperrglied zu nutzen. Durch dieses Spiel kann erreicht werden, dass das Sperrglied nicht zwangsweise von dem Steuerelement geführt wird, wodurch Beschädigungen an der Verriegelungsvorrichtung vermieden werden können. Zum Beispiel kann das Sperrglied nicht aus dem Gehäuse herausragen, falls dort das funktionswesentliche Bauteil mit einem Nocken den erforderlichen Platz versperrt. Erst wenn es zu einer Verschiebung oder Drehung des funktionswesentlichen Bauteils kommt, wodurch der Haltenocken den Platz für das Sperrglied freigibt, kann dieses dann die gewünschte Wirkverbindung mit dem funktionswesentlichen Bauteil eingehen. Zu diesem Zweck ist zwischen dem Steuerelement und dem Sperrglied eine Feder angeordnet, um die gewünschte axiale Verschiebung des Sperrgliedes zum Steuerelement zu bewirken. Somit kann das Sperrglied nachträglich in die gewünschte Verriegelungsposition gebracht werden, falls zur Zeit das funktionswesentliche Bauteil den Platz vor der Gehäuseöffnung für das Sperrglied versperren sollte. Das heißt in der Verriegelungsposition drückt das Steuerelement das Sperrglied aus dem Gehäuse der Verriegelungsvorrichtung heraus, wobei dieses nur eine Wirkverbindung mit dem funktionswesentlichen Bauteil eingehen kann, falls es dem Sperrglied nicht direkt im Wege steht. Durch eine Verschiebung oder Drehung des funktionswesentlichen Bauteils wird dann das Sperrglied durch die Federwirkung in eine Aussparung bzw. hinter einen Nocken des funktionswesentlichen Bauteils geführt.

Um nun eine zusätzliche Sicherung des Sperrgliedes zu ermöglichen, weist das eingesetzte Sicherungselement in Abhängigkeit der Position des Sperrgliedes wenigstens eine Arretierungsstellung oder eine Freigabestellung auf. In der Entriegelungsposition des Sperrgliedes, in der eben keine Wirkverbindung mit dem funktionswesentlichen Bauteil vorliegt, wird das Sperrglied formschlüssig durch das Sicherungselement, welches sich in der Arretierungsstellung befindet, gesichert. In der Freigabestellung des Sicherungselementes ist dagegen der Formschluss zwischen dem Sicherungselement und dem Sperrglied aufgehoben, so dass sich das Sperrglied in die Verriegelungsposition bewegen kann oder diese bereits eingenommen hat. Der Formschluss zwischen dem Sicherungselement und dem Sperrglied kann aus einem Absatz am Sperrglied bestehen, hinter den das Sicherungselement in der Arretierungsstellung fährt. Hierzu kann das Sicherungselement mit einer Feder beaufschlagt sein, wodurch es selbstständig von der Freigabestellung in die Arretierungsstellung überführbar ist. Außerdem kann die dafür vorgesehene Feder so angeordnet werden, dass immer ein leichter Druck von dem Sicherungselement auf das Sperrglied in der Arretierungsstellung ausgeübt wird. Somit ist sichergestellt, dass in der Entriegelungsposition des Sperrgliedes keine Bruchteile aus der Öffnung des Gehäuses austreten können und eine unbeabsichtigte Blockade des funktionswesentlichen Bauteiles bewirken. Selbst der Bruch des Sperrgliedes würde nicht zu einem Blockieren des funktionswesentlichen Bauteils führen, da das Sperrglied form- und kraftschlüssig durch das federbeaufschlagte Sicherungselement in der Arretierungsstellung gehalten wird. Zweckmäßigerweise ist aus diesem Grund das Sicherungselement im Bereich der Gehäuseöffnung für das Sperrglied angeordnet. Hierdurch wird sichergestellt, dass bei einem Defekt der Verriegelungsvorrichtung aus der Gehäuseöffnung keine Bauteile oder Bruchstücke austreten können.

Um das Sicherungselement auf einfache Art und Weise durch das Steuerelement bzw. die entsprechenden Steuermittel zu betätigen, weist das Sicherungselement Gegensteuermittel auf, die mit dem Steuermittel des Steuerelementes zusammenwirken. Hierbei führt eine Längsverschiebung des Steuerelementes auch zu einer Betätigung des Sicherungselementes, da das Steuermittel am Steuerelement mit dem Gegensteuermittel des Sicherungselementes derart zusammenwirkt, dass das Sicherungselement betätigt wird. Bei dieser Betätigung verschiebt das Steuerelement keilartig das Sicherungselement von der Arretierungsstellung in die Freigabestellung bzw. umgekehrt. Das Steuermittel und Gegensteuermittel weist jeweils eine ebene, kalotten- oder bogenförmige Steuerfläche auf, die im Wesentlichen schräg zur jeweiligen Bewegungsrichtung des Steuerelementes bzw. des Sicherungselementes ausgerichtet ist. Durch das aufeinander Abgleiten der Steuerflächen kann somit eine vertikale Bewegung des Steuerelementes für eine horizontale Bewegung des Sicherungselementes sorgen. Sofern das Sicherungselement mit einer Feder beaufschlagt ist, kann dieses selbstständig von der Freigabestellung in die Arretierungsstellung wechseln, sobald das Steuerelement den Weg für das Sicherungselement freigibt. Auch bei diesem Ablauf gleitet das Steuermittel vom Steuerelement an dem Gegensteuermittel des Sicherungselementes entlang. Zweckmäßigerweise ist das Sicherungselement verschieblich im Gehäuse der Verriegelungsvorrichtung gelagert. Hierzu können Längsführungen am Gehäuse vorgesehen sein. Diese Führungen können aus einer oder mehreren Nuten bestehen, in denen das Sicherungselement geführt ist. Ebenfalls ist es denkbar, dass ein aus dem Gehäuse herausstehender Zapfen mit einer entsprechenden Ausnehmung im Sicherungselement zusammenwirkt, um die Führung des Sicherungselementes zu übernehmen.

Des Weiteren kann es vorgesehen sein, dass das Sicherungselement Führungsmittel aufweist, die mit Gegenführungsmitteln am Sperrglied zusammenwirken. Somit kann erreicht werden, dass das Sperrglied nicht aus der Gehäuseöffnung herausschnellt, da diese Bewegung durch das Sperrglied gedämpft wird. Hierdurch lässt sich eine deutliche Geräuschreduzierung, insbesondere beim Herausfahren des Sperrgliedes, erreichen. Zu diesem Zweck können die Führungsmittel und Gegenführungsmittel als schräge aufeinander abgleitende Flächen ausgestaltet sein. Ebenfalls können diese Flächen kalotten- oder bogenförmig ausgestaltet sein. Folglich gleitet das Sperrglied mit seinem Führungsmittel beim Herausfahren aus dem Gehäuse an dem Gegenführungsmittel des Sicherungselementes ab.

Weiterhin ist es denkbar, dass das Steuerelement mehrteilig aufgebaut ist. Dabei können die jeweiligen Bauteile denselben oder einen anderen Werkstoff enthalten. Um Gewicht und Materialkosten zu sparen, kann z. B. das Bauteil, welches zum Ansteuern des Sperrglied erforderlich ist, eine Leichtmetalllegierung aufweisen, und das Bauteil, welches die Steuermittel enthält, aus Kunststoff bestehen. Ebenfalls ist es denkbar, dass alle Bauteile des Steuerelementes aus dem gleichen Werkstoff bestehen. Die jeweiligen Bauteile des Steuerelementes wirken der Art funktionsmäßig zusammen, so dass die zuvor beschriebenen Funktionen des Steuerelementes auf jeden Fall vorhanden sind, aber eventuell noch weitere hinzukommen können.

Bei einer bevorzugten Ausführungsform der Erfindung arretiert das Sperrglied das funktionswesentliche Bauteil in der Verriegelungsposition formschlüssig. Das funktionswesentliche Bauteil des Fahrzeuges kann dabei als eine Lenksäule oder ein Gangschalthebel oder dergleichen ausgestaltet sein. In der Verriegelungsposition wird die Lenksäule oder der Gangschalthebel durch das Sperrglied formschlüssig arretiert.

Ebenfalls ist die Erfindung auch auf ein Fahrzeug, insbesondere Kraftfahrzeug mit einer Verriegelungsvorrichtung nach einem der Ansprüche 1 bis 15 gerichtet.

Weitere Maßnahmen und Vorteile der Erfindung ergeben sich aus den Ansprüchen, der nachfolgenden Beschreibung und den Zeichnungen. In den Zeichnungen ist die Erfindung in einem Ausführungsbeispiel in verschiedenen Bewegungsabläufen bzw. Positionen des Sperrgliedes dargestellt. Es zeigen:
- Figur 1: die erfindungsgemäße Verriegelungsvorrichtung in einem Querschnitt, wobei sich das Sperrglied in der Verriegelungsposition befindet,
- Figur 2: die gleiche Verriegelungsvorrichtung aus Figur 1 im Querschnitt, bei der sich das Sperrglied in der Entriegelungsposition befindet, und
- Figur 3: eine Zwischenposition der Verriegelungsvorrichtung aus Figur 1 und 2 im Querschnitt, in der das Sperrglied noch nicht aus der Öffnung des Gehäuses vollständig herausragt.

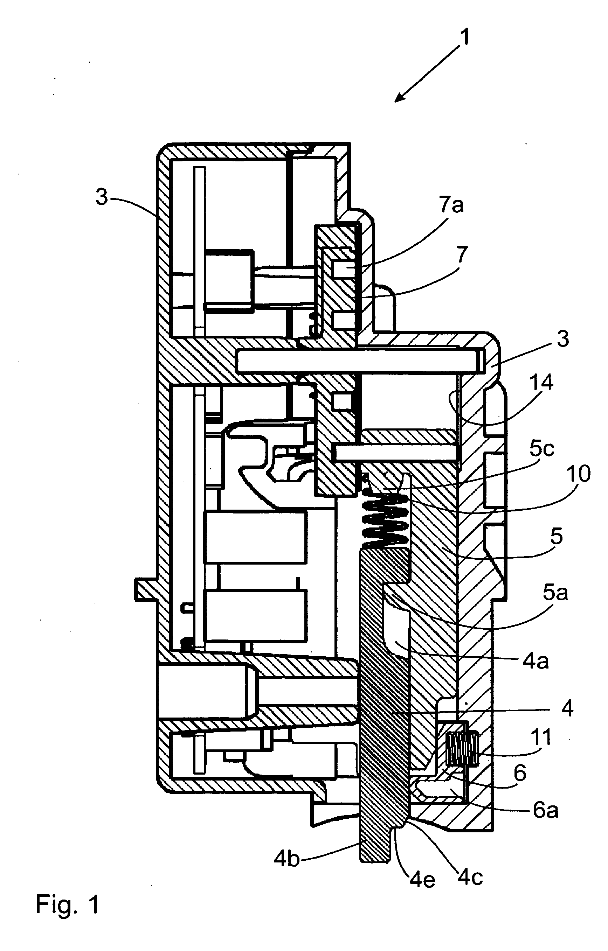

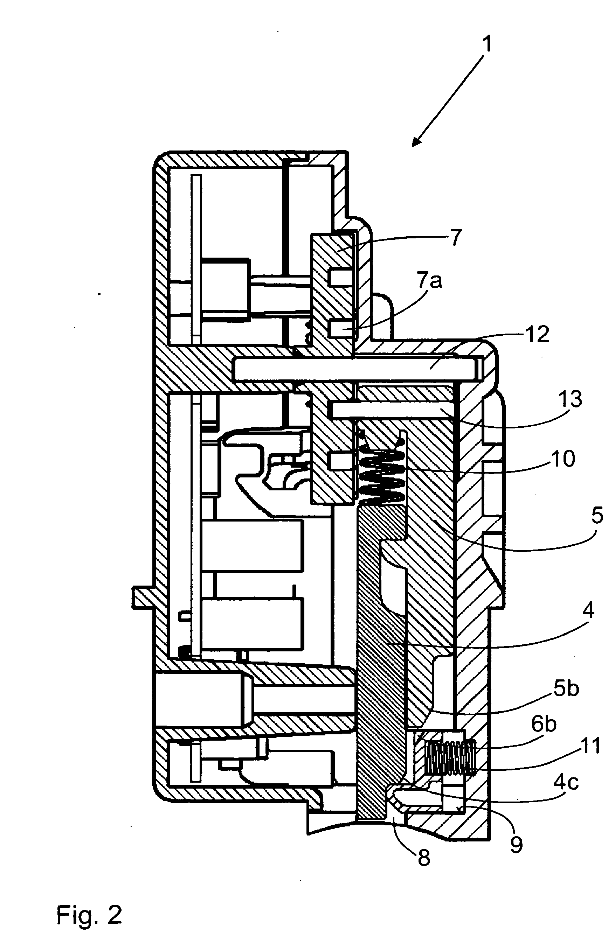

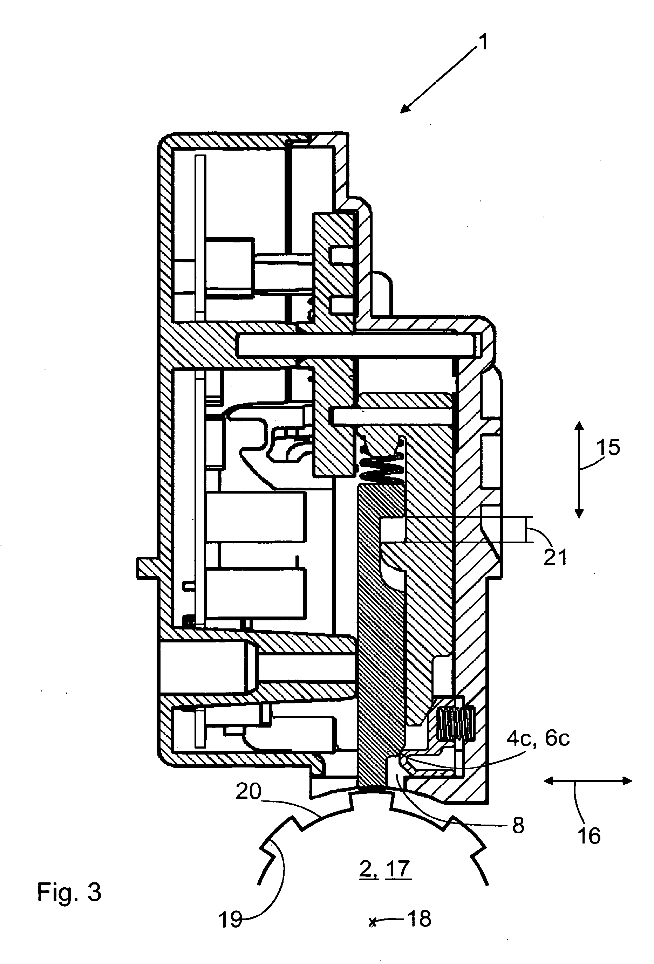

In der Figur 1 ist die erfindungsgemäße Verriegelungsvorrichtung 1 im Querschnitt gezeigt, dabei nimmt das Sperrglied 4 eine Verriegelungsposition ein, in dem es aus dem Gehäuse 3, insbesondere durch die Öffnung 8, mit seinem Arbeitsende 4b herausragt. In dieser Verriegelungsposition steht das Arbeitsende 4b in einer Wirkverbindung, insbesondere einem Formschluss, mit dem funktionswesentlichen Bauteil 2 (nicht in Figur 1 und 2 dargestellt). In der Figur 3 ist auch ein Querschnitt durch eine Lenksäule 17, die beispielsweise das funktionswesentliche Bauteil 2 bildet, dargestellt.

Wie weiter in der Figur 1 zu erkennen ist, weist das Sperrglied 4 in der Verriegelungsposition einen maximalen axialen Versatz zum Steuerelement 5 auf. Dabei ist das Steuerelement 5 durch das scheibenförmige Antriebselement 7 im Gehäuse 3 maximal nach unten verschoben worden. Das Steuerelement 5 ist endseitig über einen Führungsstift 13 mit dem Antriebselement 7 verbunden. Dabei greift ein Ende des Führungsstiftes 13 in eine spiralförmige Führungsbahn 7a des Antriebselementes 7 ein und das andere Ende des Führungsstiftes 13 ist in einer Führungsnut 14 im Gehäuse 3 verschieblich gelagert. Durch eine Drehung des Antriebselementes 7 wird der Führungsstift 13 langsam nach unten bewegt, dass heißt parallel von der Drehachse 12 des Antriebselementes 7 wegbewegt. Da der Führungsstift 13 das obere Ende des Steuerelementes 5 durchdringt und linksseitig von der Führungsbahn 7a in dem Antriebselement 7 aufgenommen wird und rechtsseitig in der Führungsnut 14 gelagert ist, wird durch eine Drehung des Antriebselements 7 das gesamte Steuerelement 5 im Gehäuse 3 längs bzw. nach oben oder unten verschoben. Das Antriebselement 7 kann selbst durch einen Elektromotor direkt oder indirekt über ein Getriebe angetrieben werden.

Damit die Bewegung des Steuerelementes 5 auch auf das Sperrglied 4 übertragen werden kann, ist zwischen den beiden Teilen eine formschlüssige Verbindung vorgesehen. Dieser Formschluss wird beispielsweise aus einem Nocken 5a am Steuerelement 5 und einer Ausnehmung 4a im Sperrglied 4 gebildet. Dabei ist die Ausnehmung 4a deutlich größer ausgestaltet als der Nocken 5a. Somit ist ein axiales Spiel durch den Freiraum 21 zwischen dem Sperrglied 4 und dem Steuerelement 5 möglich. Das Sperrglied 4 wird über die Feder 10, die zwischen dem Sperrglied 4 und dem Steuerelement 5 angeordnet ist, an den Nocken 5a gedrückt. Um die Feder 10 ortsfest zwischen dem Sperrglied 4 und dem Steuerelement 5 anzuordnen, können zusätzliche Haltemittel, wie zum Beispiel der dargestellte Vorsprung 5c oder Bohrungen zur Aufnahme der Feder 10 vorgesehen sein. Durch das axiale Spiel zwischen dem Steuerelement 5 und dem Sperrglied 4 wird erreicht, dass das Sperrglied 4 nicht zwangsweise der Bewegung des Steuerelementes 5 folgen muss. Wie in der Figur 3 gezeigt ist, kann beispielsweise das Sperrglied 4 nicht aus dem Gehäuse 3 herausragen, wenn das funktionswesentliche Bauteil 2 den Weg für das Sperrglied 4 versperrt. In diesem Fall entsteht der gezeigte Freiraum 21, wodurch eine Beschädigung der Verriegelungsvorrichtung 1 verhindert wird. Sofern das funktionswesentliche Bauteil 2 durch eine Bewegung den Weg für das Sperrglied 4 freigibt, wird dieses durch die Feder 10 in die Verriegelungsposition gedrückt. Danach steht das Sperrglied 4 in der gewünschten Wirkverbindung mit dem funktionswesentlichen Bauteil 2.

In der Figur 1 ist weiter dargestellt, wie das Sicherungselement 6 durch das untere mit einem Absatz versehene Ende des Steuerelements 5 keilartig in eine Freigabestellung gedrückt wird, so dass das Sperrglied 4 aus dem Gehäuse 3, insbesondere aus der Öffnung 8, herausragen kann. In der Verriegelungsposition ist eine Sicherung des Sperrgliedes 4 nicht notwendig, da das funktionswesentliche Bauteil 2 ohnehin blockiert werden soll. Folglich würde auch ein Materialbruch in der Verriegelungsvorrichtung 1 zu keinem weiteren Schaden führen oder sogar einen Unfall zu Folge haben.

In der Figur 2 ist das Sperrglied 4 in der Entriegelungsposition dargestellt. Wie deutlich zu erkennen ist, wird dabei das Sperrglied 4 im Bereich der Öffnung 8 durch das Sicherungselement 6 formschlüssig arretiert. In dieser Arretierungsstellung wirkt das Steuerelement 5 nicht auf das Sicherungselement 6, so dass dieses mittels der Feder 11, die beispielsweise zwischen dem Gehäuse 3 und dem Sicherungselement 6 angeordnet ist, das Sicherungselement 6 gegen das Sperrglied 4 drückt. Das Sperrglied 4 weist selbst an seinem Arbeitsende 4b einen Absatz 4e zum übrigen Schaft des Sperrgliedes 4 auf, mit dem das Sicherungselement 6 zusammenwirkt. Folglich bildet das Sicherungselement 6 in der Arretierungsstellung einen Formschluss mit dem Sperrglied 4, insbesondere der Absatz 4e mit dem unteren herausragenden Teil des spiegelverkehrten "L"-förmigen Sicherungselementes 6. Dieser untere herausragende Teil des Sicherungselementes 6 ist tiefer ausgebildet als der Absatz 4e zum Schaft des Sperrgliedes 4. Somit weist der obere bzw. vertikale Bereich des spiegelverkehrten "L"-förmigen Sicherungselements 6 einen insbesondere parallelen Abstand zum Schaft des Sperrgliedes 4 auf. Damit steht das Sicherungselement 6 in der Arretierungsstellung nur mit seinem horizontal herausragenden Teil in Kontakt zum Sperrglied 4, wodurch der gewünschte Formschluss gebildet wird. Hierbei kann selbstverständlich auch ein Spiel zwischen dem Sperrglied 4 und dem Sicherungselement 6 vorliegen.

Sofern nun in der Entriegelungsposition ein Materialbruch bei dem Sperrglied 4 oder bei einem sonstigen Bauteil der Verriegelungsvorrichtung 1 auftreten sollte, können keine Bruchstücke aus der Gehäuseöffnung 8 heraustreten, die zu einer Blockierung des funktionswesentlichen Bauteils 2 führen könnten. Wie in Figur 2 weiter ersichtlich ist, wurde das Sperrglied 4 durch das Steuerelement 5, insbesondere den Nocken 5a, aus der Verriegelungsposition in die Entriegelungsposition bewegt bzw. verschoben. Das Steuerelement 5 wurde selbst durch das Antriebselement 7 hoch gezogen, dass heißt von der Öffnung 8 wegbewegt, und nimmt durch diese Bewegung zwangsweise mit dem Nocken 5a das Sperrglied 4 mit. Bei dieser Bewegung gibt gleichzeitig das Steuermittel 5b an dem Steuerelement 5 den Weg für das Sicherungselement 6 frei. In der Freigabestellung weist somit das Sicherungselement 6 keinen Kontakt zum Steuerelement 5 auf. Das Sicherungselement 6 ist selbst in einer Führung 9 z. B. im Gehäuse 3 beweglich bzw. verschieblich gelagert. Außerdem wirkt rückseitig die Feder 11 auf das Sicherungselement 6, um dieses gegen das Sperrglied 4 zu drücken. Hierfür ist im Sicherungselement 6 eine Bohrung vorhanden, um die Feder 11 formschlüssig aufzunehmen und ortsfest zu positionieren. Im Gehäuse 3 kann ebenfalls eine Aufnahme für die Feder 11 vorgesehen sein. Damit das Sicherungselement 6 möglichst geringe Trägheitsmomente aufweist, ist rückseitig eine weitere Ausnehmung 6a, insbesondere im horizontal herausragenden Teil vorgesehen, wodurch das Gewicht des Sicherungselementes 6 reduziert werden kann. Außerdem kann das Sicherungselement 6 aus einem Kunststoff- oder einem Leichtmetallteil bestehen, welches in einem Spritzgussverfahren hergestellt worden ist.

Aus der Figur 3 geht der weitere Bewegungsablauf in der Verriegelungsvorrichtung 1 zur Verriegelung des funktionswesentlichen Bauteils 2 hervor. Dabei wird deutlich, wie das Sicherungselement 6 von der Arretierungsstellung in die Freigabestellung überführt wird. Das Sperrglied 4 befindet sich zunächst in der Entriegelungsposition und wird von dem Sicherungselement 6 in der Arretierungsstellung gesichert. Soll nun eine Verriegelung des funktionswesentlichen Bauteils 2 vorgenommen werden, so wird das Antriebselement 7 betätigt, wodurch sich das Steuerelement 5 aus seiner oberen Lage in eine untere Lage bewegt. Durch diese Längsverschiebung 15 wird das Sperrglied 4 mittelbar gezwungen, der Bewegung 15 des Steuerelementes 5 zu folgen. Dabei übt das Steuerelement 5 über die Feder 10 eine Druckkraft auf das parallel gelagerte Sperrglied 4 aus, um dieses von der Entriegelungsposition in die Verriegelungsposition zu bewegen. Da jedoch das Sperrglied 4 noch formschlüssig durch das Sicherungselement 6 in der Entriegelungsposition gehalten ist, muss das Steuerelement 5 zunächst das Sicherungselement 6 derart verschieben, dass dieses die Freigabestellung einnimmt. Hierzu sind die keilförmigen Steuermittel 5b am unteren Ende des Steuerelements 5 in Form von schrägen oder kalottenförmigen Steuerflächen vorgesehen. Diese treffen nun bei der Abwärtsbewegung 15 des Steuerelements 5 auf die Gegensteuermittel 6b, ebenfalls in Form von schrägen oder kalottenförmigen Steuerflächen, an dem Sicherungselement 6. Die Gegensteuermittel 6b sind im oberen Bereich des vertikalen Teils des Sicherungselements 6 angeordnet. Die Schrägen der jeweiligen Steuerflächen der Steuermittel 5b und Gegensteuermittel 6b sind zweckmäßigerweise parallel zueinander ausgerichtet. Somit gleiten die jeweiligen Steuerflächen bei der Abwärtsbewegung aneinander ab, wobei die vertikale Bewegung 15 des Steuerelements 5 in eine horizontale Bewegung 16 des Sicherungselementes 6 umgesetzt wird. Dabei wird das Sicherungselement 6 gegen die Feder 11 in die Freigabestellung gedrückt und der Formschluss zwischen dem Sicherungselement 6 und dem Sperrglied 4 aufgehoben. Um ein schnelles und ruckartiges Herausschießen des Sperrglieds 4 aus der Gehäuseöffnung 8 zu vermeiden, sind beispielsweise zusätzliche Führungsmittel 6c am Sicherungselement 6 und Gegenführungsmittel 4c am Sperrglied 4 vorgesehen. Diese Führungsmittel 6c bzw. Gegenführungsmittel 4c werden zweckmäßigerweise ebenfalls durch schräge oder kalottenförmige Führungsflächen, die vorzugsweise parallel zueinander angeordnet sind, gebildet. Somit führt die horizontale Bewegung 16 des Sicherungselementes 6 von der Arretierungsstellung in die Freigabestellung zu einer vertikalen Abwärtsbewegung 15 des Sperrgliedes 4. Sofern das Sperrglied 4 mit dem Arbeitsende 4b auf keinen Vorsprung oder Nocken 19 des funktionswesentlichen Bauteils 2 trifft, findet unmittelbar eine Verriegelung des funktionswesentlichen Bauteils 2 statt. Anderenfalls wird durch eine Drehung oder Bewegung des funktionswesentlichen Bauteils 2 bzw. der Lenksäule 17 um den Drehpunkt 18 der Platz für das Sperrglied 4 durch den Nocken 19 freigegeben, so dass dieses mit ihrem Arbeitsende 4b in eine Aussparung 20 zwischen zwei Nocken 19 formschlüssig eingreifen kann.

### Bezugszeichenliste

- 1: Verriegelungsvorrichtung
- 2: funktionswesentliches Bauteil
- 3: Gehäuse
- 4: Sperrglied
- 4a: Ausnehmung
- 4b: Arbeitsende
- 4c: Gegenführungsmittel
- 4e: Absatz
- 5: Steuerelement
- 5a: Nocken
- 5b: Steuermittel
- 5c: Vorsprung für 10
- 6: Sicherungselement
- 6a: Ausnehmung
- 6b: Gegensteuermittel
- 6c: Führungsmittel
- 7: Antriebselement
- 7a: Führungsbahn für 5
- 8: Öffnung
- 9: Führung für 6
- 10: Feder für 4
- 11: Feder für 6
- 12: Drehachse für 7
- 13: Führungsstift für 5
- 14: Führungsnut für 5
- 15: Pfeil für Bewegungsrichtung von 4 bzw. 5
- 16: Pfeil für Bewegungsrichtung von 6
- 17: Lenksäule
- 18: Drehpunkt von 17
- 19: Nocken an 17 bzw. 2
- 20: Einbuchtung
- 21: Freiraum

## Patentansprüche

1. Verriegelungsvorrichtung (1) zum Verriegeln und/oder Entriegeln eines funktionswesentlichen Bauteils (2) eines Fahrzeugs mit
einem Gehäuse (3) und
einem Sperrglied (4), welches durch ein Steuerelement (5) zumindest zwei Positionen einnehmen kann, nämlich
eine Verriegelungsposition, in der das Sperrglied (4) aus dem Gehäuse (3) durch eine Öffnung (8) rausragt und in einer Wirkverbindung mit dem funktionswesentlichen Bauteil (2) steht, und
eine Entriegelungsposition, in der das Sperrglied (4) weitestgehend im Gehäuse (3) angeordnet ist und in keiner Wirkverbindung mit dem funktionswesentlichen Bauteil (2) steht, und
einem Sicherungselement (6), womit das Sperrglied (4) zumindest in der Entriegelungsposition arretierbar ist,
wobei das Steuerelement (5) zur Betätigung des Sicherungselements (6) gleichfalls Steuermittel (5b) aufweist,
**dadurch gekennzeichnet,**
**dass** Sicherungselement (6) Führungsmittel (6c) aufweist, die mit Gegenführungsmitteln (4c) am Sperrglied (4) zusammenwirken.

2. Verriegelungsvorrichtung (1) nach Anspruch 1,
**dadurch gekennzeichnet,**
**dass** das Steuerelement (5) und/oder das Sperrglied (4) längsverschiebbar im Gehäuse (3) angeordnet sind.

3. Verriegelungsvorrichtung (1) nach Anspruch 2,
**dadurch gekennzeichnet,**
**dass** das Steuerelement (5) parallel verschiebbar zum Sperrglied (4) angeordnet ist.

4. Verriegelungsvorrichtung (1) nach einem der Ansprüche 1 bis 3
**dadurch gekennzeichnet,**
**dass** das Steuerelement (5) über ein drehbares Antriebselement (7) längsverschiebbar ist.

5. Verriegelungsvorrichtung (1) nach einem der Ansprüche 1 bis 4
**dadurch gekennzeichnet,**
**dass** das Steuerelement (5) mit dem Sperrglied (4) einen Formschluss bildet, um das Sperrglied (4) betätigen zu können, wobei der Formschluss durch einen Nocken (5a), der mit einer Ausnehmung (6a) zusammenwirkt, gebildet ist.

6. Verriegelungsvorrichtung (1) nach einem der Ansprüche 1 bis 5
**dadurch gekennzeichnet,**
**dass** zwischen dem Steuerelement (5) und dem Sperrglied (4) eine Feder (10) angeordnet ist, um eine axiale Verschiebung des Sperrglieds (4) zum Steuerelement (5) zu bewirken.

7. Verriegelungsvorrichtung (1) nach einem der Ansprüche 1 bis 6
**dadurch gekennzeichnet,**
**dass** das Sicherungselement (6) in Abhängigkeit der Position des Sperrgliedes (4) wenigstens eine Arretierungsstellung oder eine Freigabestellung einnimmt.

8. Verriegelungsvorrichtung (1) nach einem der Ansprüche 1 bis 7,
**dadurch gekennzeichnet,**
**dass** das Sicherungselement (6) im Bereich der Öffnung (8) angeordnet ist.

9. Verriegelungsvorrichtung (1) nach einem der Ansprüche 1 bis 8,
**dadurch gekennzeichnet,**
**dass** Sicherungselement (6) Gegensteuermittel (6b) aufweist, die mit den Steuermitteln (5b) des Steuerelementes (5) zusammenwirken.

10. Verriegelungsvorrichtung (1) nach Anspruch 9,
**dadurch gekennzeichnet,**
**dass** die Steuermittel (5b) und die Gegensteuermittel (6b) ebene, kalotten- oder bogenförmige Steuerflächen enthalten, die schräg zur Bewegungsrichtung (15,16) des Steuerelementes (5) bzw. des Sicherungselementes (6) ausgerichtet sind.

11. Verriegelungsvorrichtung (1) nach einem der Ansprüche 1 bis 10,
**dadurch gekennzeichnet,**
**dass** das Sicherungselement (6) verschieblich am Gehäuse (3) gelagert ist.

12. Verriegelungsvorrichtung (1) nach einem der Ansprüche 1 bis 11,
**dadurch gekennzeichnet,**
**dass** das Sicherungselement (6) mit einer Feder (11) beaufschlagt ist, wodurch es selbstständig von einer Stellung in eine andere überführbar ist.

13. Verriegelungsvorrichtung (1) nach einem der Ansprüche 1 bis 12,
**dadurch gekennzeichnet,**
**dass** das Steuerelement (5) mehrteilig aufgebaut ist, wobei die jeweiligen Bauteile funktionsmäßig zusammenwirken.

14. Verriegelungsvorrichtung (1) nach einem der Ansprüche 1 bis 13,
**dadurch gekennzeichnet,**
**dass** das Sperrglied (4) das funktionswesentliche Bauteil (2) in der Verriegelungsposition formschlüssig arretiert, wobei insbesondere das funktionswesentliche Bauteil (2) des Fahrzeuges, als eine Lenksäule (17) bzw. ein Gangschalthebel ausgestaltet ist.

15. Fahrzeug, insbesondere Kraftfahrzeug, mit einer Verriegelungsvorrichtung (1) nach einem der vorhergehenden Ansprüche.

## Claims

1. A locking device (1) for locking and/or unlocking a functionally important component (2) of
a vehicle with
a casing (3) and
a blocking element (4) which, via a control member (5), can assume at least two positions, namely
a locking position, in which the blocking element (4) protrudes out of the casing (3) through an aperture (8) and is operatively connected to the functionally important component (2), and
an unlocking position, in which the blocking element (4) is arranged as far in the casing (3) as possible and is not operatively connected to the functionally important component (2), and
a retaining member (6), with which the blocking element (4) is able to be arrested at least in the unlocking position,
wherein the control member (5) also has control means (5b) for actuating the retaining member (6),
**characterised in that**
the retaining member (6) has guide means (6c) which cooperate with counterguiding means (4c) on the blocking element (4).

2. The locking device (1) according to Claim 1,
**characterised in that**
the control member (5) and/or the blocking element (4) are arranged in the casing (3) in a longitudinally displaceable manner.

3. The locking device (1) according to Claim 2,
**characterised in that**
the control member (5) is arranged displaceably in a parallel manner relative to the blocking element (4).

4. The locking device (1) according to one of claims 1 to 3,
**characterised in that**
the control member (5) is longitudinally displaceable via a rotatable drive member (7).

5. The locking device (1) according to one of claims 1 to 4,
**characterised in that**
the control member (5) forms a form fit with the blocking element (4) in order to be able to actuate the blocking element (4), wherein the form fit is formed by a tappet (5a) which cooperates with a recess (6a).

6. The locking device (1) according to one of claims 1 to 5,
**characterised in that**
a spring (10) is arranged between the control member (5) and the blocking element (4) in order to bring about an axial displacement of the blocking element (4) relative to the control member (5).

7. The locking device (1) according to one of claims 1 to 6,
**characterised in that**
the retaining member (6) assumes at least one arresting state or one releasing state depending on the position of the blocking element (4).

8. The locking device (1) according to one of claims 1 to 7,
**characterised in that**
the retaining member (6) is arranged in the region of the aperture (8).

9. The locking device (1) according to one of claims 1 to 8,
**characterised in that**
the retaining member (6) has countercontrol means (6b) which cooperate with the control means (5b) of the control member (5).

10. The locking device (1) according to claim 9,
**characterised in that**
the control means (5b) and the countercontrol means (6b) contain flat, dome-shaped or arc-shaped control surfaces which are oriented obliquely to the direction of movement (15, 16) of the control member (5) and retaining member (6) respectively.

11. The locking device (1) according to one of claims 1 to 10,
**characterised in that**
the retaining member (6) is displaceably mounted on the casing (3).

12. The locking device (1) according to one of claims 1 to 11,
**characterised in that**
the retaining member (6) is acted upon by a spring (11), as a result of which it can be independently transferred from one state into another.

13. The locking device (1) according to one of claims 1 to 12,
**characterised in that**
the control member (5) is constructed of several parts, wherein the respective components functionally cooperate.

14. The locking device (1) according to one of claims 1 to 13,
**characterised in that**
the blocking element (4) arrests in a form-fit manner the functionally important component (2) in the locking position, wherein in particular the functionally important component (2) of the vehicle is configured as a steering column (17) or a gear shift lever.

15. A vehicle, in particular a motor vehicle, with a locking device (1) according to one of the preceding claims.

## Revendications

1. Dispositif de verrouillage (1) permettant de verrouiller et/ou de déverrouiller un élément fonctionnellement essentiel (2) d'un véhicule, avec
un boîtier (3),
un élément de blocage (4) qui, au moyen d'un élément de commande (5), peut adopter au moins deux positions, à savoir
une position de verrouillage, dans laquelle l'élément de blocage (4) dépasse hors du boîtier (3) par une ouverture (8) et est en relation active avec l'élément fonctionnellement essentiel (2),
et une position de déverrouillage, dans laquelle l'élément de blocage (4) est disposé pour l'essentiel dans le boîtier (3) et n'est pas en relation active avec l'élément fonctionnellement essentiel (2),
et un élément de sécurité (6), avec lequel l'élément de blocage (4) peut être au moins arrêté dans la position de déverrouillage,
sachant que l'élément de commande (5) présente également des moyens de commande (5b) pour actionner l'élément de sécurité (6),
**caractérisé en ce**
**que** l'élément de sécurité (6) présente des moyens de guidage (6c), qui coopèrent avec des moyens de guidage complémentaires ou de contre-guidage (4c) sur l'élément de blocage (4).

2. Dispositif de verrouillage (1) selon la revendication 1,
**caractérisé en ce**
**que** l'élément de commande (5) et/ou l'élément de blocage (4) sont disposés à coulissement longitudinal dans le boîtier (3).

3. Dispositif de verrouillage (1) selon la revendication 2,
**caractérisé en ce**
**que** l'élément de commande (5) est disposé à coulissement parallèlement à l'élément de blocage (4).

4. Dispositif de verrouillage (1) selon l'une des revendications 1 à 3,
**caractérisé en ce**
**que** l'élément de commande (5) est à coulissement longitudinal au moyen d'un élément d'entraînement rotatif (7).

5. Dispositif de verrouillage (1) selon l'une des revendications 1 à 4,
**caractérisé en ce**
**que** l'élément de commande (5) forme un engagement positif avec l'élément de blocage (4) afin de pouvoir actionner l'élément de blocage (4), sachant que l'engagement positif est formé par un ergot ou une came (5a) qui coopère avec un évidement (6a).

6. Dispositif de verrouillage (1) selon l'une des revendications 1 à 5,
**caractérisé en ce**
**qu'**un ressort (10) est disposé entre l'élément de commande (5) et l'élément de blocage (4) afin de produire un déplacement axial de l'élément de blocage (4) par rapport à l'élément de commande (5).

7. Dispositif de verrouillage (1) selon l'une des revendications 1 à 6,
**caractérisé en ce**
**que** l'élément de sécurité (6) prend, en fonction de la position de l'élément de blocage (4), au moins une position d'arrêt ou une position de libération.

8. Dispositif de verrouillage (1) selon l'une des revendications 1 à 7,
**caractérisé en ce**
**que** l'élément de sécurité (6) est disposé dans la région de l'ouverture (8).

9. Dispositif de verrouillage (1) selon l'une des revendications 1 à 8,
**caractérisé en ce**
**que** l'élément de sécurité (6) présente des moyens de commande complémentaires ou de contre-commande (6b) qui coopèrent avec les moyens de commande (5b) de l'élément de commande (5).

10. Dispositif de verrouillage (1) selon la revendication 9,
**caractérisé en ce**
**que** les moyens de commande (5b) et les moyens de commande complémentaires ou de contre-commande (6b) comprennent des surfaces de commande planes, en forme de calotte ou en arc, qui sont orientées en oblique par rapport à la direction de déplacement (15, 16) de l'élément de commande (5) ou respectivement de l'élément de sécurité (6).

11. Dispositif de verrouillage (1) selon l'une des revendications 1 à 10,
**caractérisé en ce**
**que** l'élément de sécurité (6) est monté à coulissement sur le boîtier (3).

12. Dispositif de verrouillage (1) selon l'une des revendications 1 à 11,
**caractérisé en ce**
**que** l'élément de sécurité (6) est sollicité par un ressort (11), de sorte qu'il peut être transféré de lui-même d'une position dans une autre.

13. Dispositif de verrouillage (1) selon l'une des revendications 1 à 12,
**caractérisé en ce**
**que** l'élément de commande (5) est réalisé en plusieurs parties, sachant que les parties respectives coopèrent fonctionnellement.

14. Dispositif de verrouillage (1) selon l'une des revendications 1 à 13,
**caractérisé en ce**
**que** l'élément de blocage (4) arrête par engagement positif l'élément fonctionnellement essentiel (2) dans la position de verrouillage, sachant que l'élément fonctionnellement essentiel (2) du véhicule est en particulier réalisé sous la forme d'une colonne de direction (17) ou d'un levier de changement de vitesse.

15. Véhicule, en particulier véhicule automobile, avec un dispositif de verrouillage (1) selon l'une des revendications précédentes.
